# EUROPEAN PATENT APPLICATION

(11) **EP 1 316 752 A1**
(43) Date of publication of application: **04.06.2003**
(21) Application number: 02425723.0
(22) Date of filing: 27.11.2002
(51) Int. Cl.: F16L 25/00, F16L 37/14

(54) **Coupling device for corrugated tubes**

(30) Priority: 28.11.2001 IT RM20010217 U
(71) Applicant: Afatec S.r.l., 64024 Notaresco (IT)
(72) Inventor: De Nigris, Franco, 64024 Notaresco (TE) (IT)
(74) Representative: Iannone, Carlo Luigi

(57) **Abstract**

The present invention relates to a coupling device for corrugated hose or flexible pipes (1, 1') with a joint (3, 3'), characterised in that at least a sealing element (2, 2') is provided on at least an end turn of an end of said hose or flexible pipe (1, 1'), in that said joint (3, 3') provides a seat (4, 4') for said end of said hose or flexible pipe(1, 1'), said seat (4, 4') having a depth such to house a part of hose or flexible pipe (1, 1') comprising at least a further turn, beside the one on which said sealing element (2, 2') is provided, in that openings (5, 5') are provided on the outer body of said joint (3, 3'), in correspondence of said further turn, when the hose or flexible pipe (1, 1') is introduced within said seat (4, 4'), said openings (5, 5') allowing the insertion of a substantially U-shaped fork element (6, 6'), that is placed with the two vertical arms straddling on said further turn of the hose or flexible pipe (1, 1') and with the horizontal arm outside the joint (3, 3') body, in such a way to lock the hose or flexible pipe (1, 1') in position.

## Description

The present invention relates to s coupling device for corrugated hose or flexible pipes.

More specifically, the invention concerns a device of the above kind that can be used either for water and other kind of liquids, and for gas systems.

During the years, many solutions have been suggested to allow the connection of hose or flexible pipes.

Corrugated hose or flexible pipes are mainly used for hydraulic systems, but they are also used for gas systems, providing a welding in the joint coupling.

Measure cut hoses or flexible pipes are available on the market, with the relevant joints already provided at the ends of the hose or flexible pipe, as well as hose or flexible pipes to be cut according to the neediness.

In the first case, it is well evident which are the drawbacks for the use as well as for the storage of different lengths of the hose or flexible pipes to satisfy the different needing.

As to the hose or flexible pipes that must be cut at measure, before coupling the joint for the subsequent screwing of the use, different system exist allowing their cut and thus the application of the seals and of the relevant joints.

All the technologies presently available on the market provide particular fittings for the positioning of the seals, and thus of the joints.

In any case, they are difficult operations, requiring a certain handeability and in any case noticeable time and costs.

Another problem that must be taken into consideration is that relevant to the safety of the coupling, and to the sealing of the same, particularly if the hose or flexible pipe is to be used for gas systems, the safety standards of which are remarkably more strict.

In view of the above, the Applicant has realised a solution which allows to solve all the above mentioned problems and drawbacks.

Main object of the present invention is therefore that of providing a coupling device which allows to obtain an optimum and quick coupling.

Still another object of the present invention is that of providing a device of the above kind that is very simple under a constructive point of view.

Further object of the present invention is that of providing a device of the above kind giving guarantees for the safety of the joint even for the standard required for the gas systems.

The solution suggested according to the present invention is based on a development of a coupling device already employed for boilers, but this development requires the introduction of technical solutions for the coupling of corrugated hose or flexible pipes.

It is therefore specific object of the present invention a coupling device for corrugated hose or flexible pipes with a joint, characterised in that at least a sealing element is provided on at least an end turn of an end of said hose or flexible pipe, in that said joint provides a seat for said end of said hose or flexible pipe, said seat having a depth such to house a part of hose or flexible pipe comprising at least a further turn, beside the one on which said sealing element is provided, in that openings are provided on the outer body of said joint, in correspondence of said further turn, when the hose or flexible pipe is introduced within said housing, said openings allowing the insertion of a substantially U-shaped fork element, that is placed with the two vertical arms straddling on said further turn of the hose or flexible pipe and with the horizontal arm outside the joint body, in such a way to lock the hose or flexible pipe in position.

Preferably, according to the invention, outside said joint, in correspondence of the opening for the insertion of the substantially U-shaped element, a seat is provided for hidden housing the horizontal arm of the same substantially U-shaped element.

Always according to the invention, within said joint a shoulder for abutment of said hose or flexible pipe is provided.

Still according to the invention, said seat for housing the hose or flexible pipe within the joint provides a section reduction, from outside toward inside, in correspondence of the passage between said further turn and said at least a turn on which said sealing element is provided.

Furthermore, according to the invention, said at least a sealing element is comprised of an O-ring.

Preferably, according to the invention, two sealing elements are provided on the last two turns on the end of said hose or flexible pipe to be inserted within said joint.

Still according to the invention, said fork element can be inserted within said openings only from one direction.

The present invention will be now described, for illustrative but not limitative purposes, according to its preferred embodiments, with particular reference to the figures of the enclosed drawings, wherein:
figure 1 is a front view of a first embodiment of a device according to the invention;
figure 2 is a longitudinal section of the device of figure 1;
figure 3 is a top view of the device of figure 1;
figure 4 is a front view of a second embodiment of a device according to the invention;
figure 5 is a longitudinal section of the device of figure 4;
figure 6 is a top view of the device of figure 4;
figure 7 is a front view of a third embodiment of a device according to the invention;
figure 8 is a longitudinal section of the device of figure 7;
figure 9 is a top view of the device of figure 7;
figure 10 is a front view of a fourth embodiment of a device according to the invention;
figure 11 is a longitudinal section of the device of figure 10; and
figure 12 is a top view of the device of figure 10.

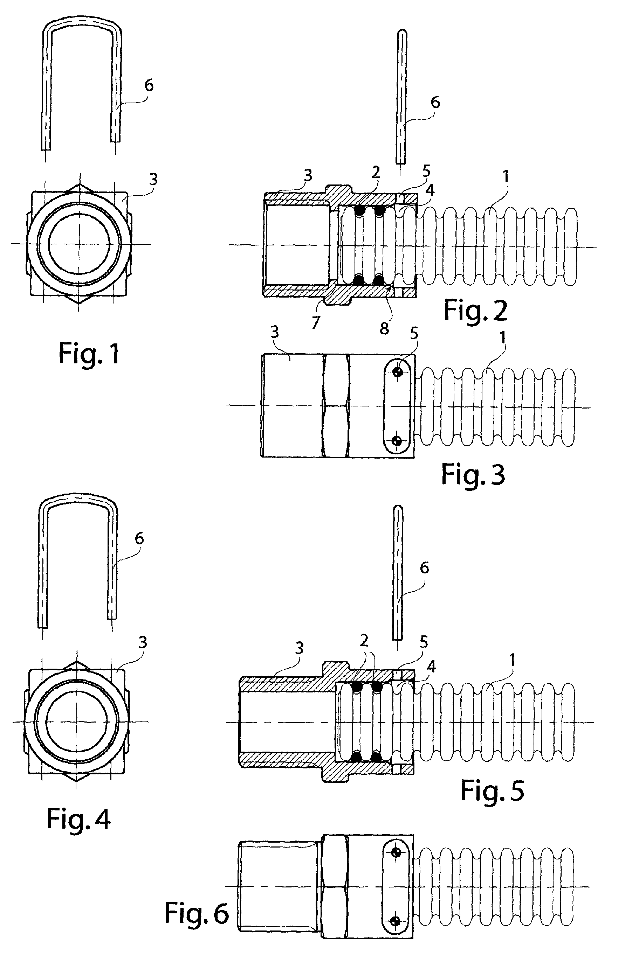

Observing now figures 1 - 6, two embodiments of the device according to the invention are shown, that will be described all together in the following, using the same reference numbers, the two embodiments being different only in that the joint is of the female (figures 1 - 3) of male (figures 4 - 6) kind.

The device according to the invention is applied on a corrugated hose or flexible pipe 1, on which, once measure cut, two sealing O-rings 2 are placed on the last two turns. Obviously, the number of O-rings 2 could be different, i.e. it could be provided only one O-ring, or a higher number.

Joint 3, a female joint in figure 2, a male joint in figure 5, provides a seat 4, within which the end of the hose or flexible pipe 1 on which the O-rings 2 have been provided is inserted. Depth of the seat 4 is such to allow the introduction of a part of hose or flexible pipe 1 including said O-rings 2 and a further turn, that will be placed in correspondence of two holes 5, realised on the outer body of the joint 3, and through which a fork 6 is inserted.

In order to obtain the proper insertion of the hose or flexible pipe 1 within the seat 4 of the joint 3, a shoulder 7 is provided inside the same joint 3.

Further, always in order to optimise the insertion of the tube 1 within the joint 3, the inner section of the seat 4 narrows, by providing a sloping connection wall 8, to obtain a narrower section, thus tightly coupling on the tube 1, in correspondence of the O-rings 2.

Once placed the hose or flexible pipe 1 within the seat 4, the fork 6 is inserted through the holes 5, straddling on the third turn of the hose or flexible pipe 1, or in any case on the turn on which it has been decided to realise the coupling, with the horizontal part of the fork 6 remaining outside the body of the joint 3.

In this way a very easy, quick and convenient coupling is obtained.

The only operation to be carried out, beside the measure cut of the hose or flexible pipe 1, in case it is a long hose or flexible pipe and not a pre-cut hose or flexible pipe, is that of placing the O-rings 2 on the end turns of the hose or flexible pipe, and then inserting the hose or flexible pipe within the joint 3, and then applying the fork 6.

The extraction of the fork 6 will allow an easy removal of the coupling.

Furthermore, by the solution according to the present invention, being the coupling system able to rotate, it is possible to apply the joints directly on the hose or flexible pipe before their application on the points to be jointed, thus remarkably simplifying the fixing operations.

However, solutions shown in figures 1 - 6 cannot be used for gas systems, since the coupling could be considered as lacking of sufficient safety, and thus not fulfilling the international standard requirements. In fact, even a child could also remove fork 6 too much easily.

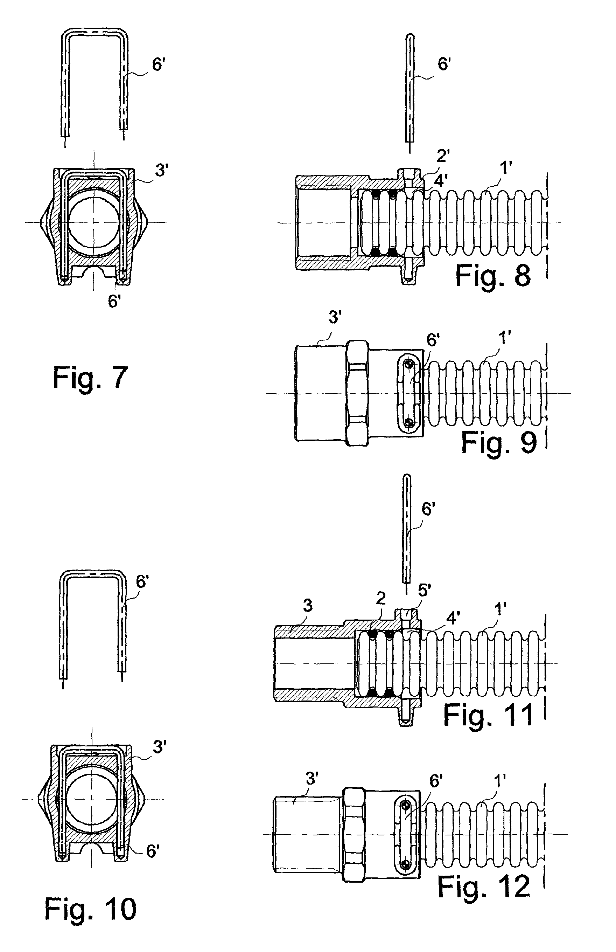

In figures 7 - 9 and 10 - 12, two embodiments of the device according to the invention are shown that can be considered able to pass the international examinations as to the safety standard requirements are concerned.

In the various figures, the same reference numbers will be used for the elements corresponding to those or flexible pipe of the preceding figures 1 - 6, with the adding of an apex.

In this case too, the two embodiments differ only by the fact that the joint is of the female (figures 7 - 9) or male (figures 10 - 12) kind.

However, to allow the homologation for gas systems, in correspondence of holes 5' on the outer part of the joint 3' a seat 8' is provided, within which the horizontal part of the fork 6' will be housed, thus preventing the accidental removal, unless a suitable tool is used.

Preferably, in the solution suitably realised for gas systems, said fork can be inserted only from a direction, as can be clearly seen from the enclosed figures.

The present invention has been described for illustrative but not limitative purposes, according to its preferred embodiments, but it is to be understood that modifications and/or changes can be introduced by those or flexible pipe skilled in the art without departing from the relevant scope as defined in the enclosed claims.

## Claims

1. Coupling device for corrugated hose or flexible pipes with a joint, **characterised in that** at least a sealing element is provided on at least an end turn of an end of said hose or flexible pipe, **in that** said joint provides a seat for said end of said hose or flexible pipe, said seat having a depth such to house a part of hose or flexible pipe comprising at least a further turn, beside the one on which said sealing element is provided, **in that** openings are provided on the outer body of said joint, in correspondence of said further turn, when the hose or flexible pipe is introduced within said housing, said openings allowing the insertion of a substantially U-shaped fork element, that is placed with the two vertical arms straddling on said further turn of the hose or flexible pipe and with the horizontal arm outside the joint body, in such a way to lock the hose or flexible pipe in position.

2. Coupling device for corrugated hose or flexible pipes with a joint according to claim 1, **characterised in that** outside said joint, in correspondence of the opening for the insertion of the substantially U-shaped element, a seat is provided for hidden housing the horizontal arm of the same substantially U-shaped element.

3. Coupling device for corrugated hose or flexible pipes with a joint according to one of the preceding claims, **characterised in that** within said joint a shoulder for abutment of said hose or flexible pipe is provided.

4. Coupling device for corrugated hose or flexible pipes with a joint according to one of the preceding claims, **characterised in that** said seat for housing the hose or flexible pipe within the joint provides a section reduction, from outside toward inside, in correspondence of the passage between said further turn and said at least a turn on which said sealing element is provided.

5. Coupling device for corrugated hose or flexible pipes with a joint according to one of the preceding claims, **characterised in that** said at least a sealing element is comprised of a O-ring.

6. Coupling device for corrugated hose or flexible pipes with a joint according to one of the preceding claims, **characterised in that** two sealing elements are provided on the last two turns on the end of said hose or flexible pipe to be inserted within said joint.

7. Coupling device for corrugated hose or flexible pipes with a joint according to one of the preceding claims, **characterised in that** said fork element can be inserted within said openings only from one direction.

8. Coupling device for corrugated hose or flexible pipes with a joint according to each one of the preceding claims, substantially as illustrated and described.
